# EUROPEAN PATENT APPLICATION

(11) **EP 2 533 580 A1**
(43) Date of publication of application: **12.12.2012**
(21) Application number: 11809198.2
(22) Date of filing: 23.05.2011
(51) Int. Cl.: H04W 52/02

(54) **METHOD FOR ENTERING IDLE MODE AND MOBILE TERMINAL FOR IMPLEMENTING SUCH METHOD**

(30) Priority: 22.07.2010 CN 201010236703
(71) Applicant: ZTE Corporation, Shenzhen, Guangdong 518057 (CN)
(72) Inventor: WANG, Cheng, Shenzhen Guangdong 518057 (CN)
(74) Representative: Manitz, Finsterwald & Partner GbR
(86) International application number: PCT/CN2011/074510
(87) International publication number: WO 2012/010010

(57) **Abstract**

The present invention discloses a method for entering into an idle mode comprising: a mobile terminal getting ready to enter into an idle state; and determining whether a data connection exists currently, and if the data connection exists, sending a connection release message to a network side, and the mobile terminal entering into the idle state after receiving a reply message, if the data connection does not exist, the mobile terminal entering into the idle state directly. The present invention further discloses a mobile terminal to which the method is applied. Using the method and mobile terminal described above, the mobile terminal can enter into the idle state directly, thereby avoiding waste of electricity in the state transition process and extending the idle time of the mobile terminal.

## Description

### Technical Field

The present invention relates to the field of mobile terminal power management, and more particularly, to a method for entering into an idle mode and a mobile terminal to which the method is applied.

### Background of the Related Art

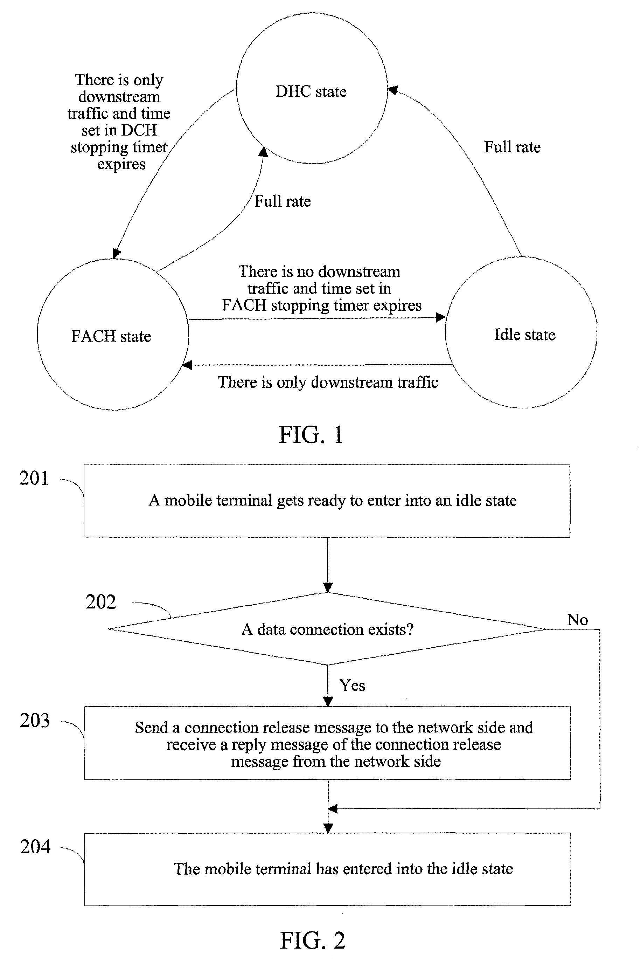

Currently, a variety of mobile phone network applications appear more and more in smart mobile terminals, and network informatization applications are ubiquitous in our lives, providing convenient and efficient services, thus Internet-related functions and telephone short message functions in the mobile terminals become equally important. The 3rd-Generation Partner Project (3GPP) specifies working states of the mobile terminals and transition between the states. FIG. 1 is a schematic diagram of the working states and the transition process specified in the 3GPP. As shown in FIG. 1, when a mobile terminal exchanges data with a network, a terminal protocol stack will transit from a low-power idle state to a dedicated channel (DCH) state; when the mobile terminal only receives downstream data at the network side, the network side starts a DCH state stopping timer. When the time set in the timer expires, if there is still only downstream traffic, the network side will notify the terminal protocol stack to transit from the DCH state to a Forward Access Channel (FACH) state. When the mobile terminal exchanges both upstream and downstream data with the network side or the data rate is relatively large, the terminal protocol stack can also transit from the FACH state back to the DCH state. When the mobile terminal is in the FACH state and there is no data exchange, the network side will start a FACH state stopping timer. When the time set in the timer expires, if there is still no data traffic, the network side will notify the terminal protocol stack to transit from the FACH state to the low-power idle state. The state transition process is dominated by the network side, which informs the mobile terminal to transit to a certain state by sending a message.

Normally, there is great difference in currents consumed by the mobile terminal under the three states: the current consumed under the idle state is 1mA to 2mA; the current consumed under the FACH state is 100mA ~ 130mA; and the current consumed under the DCH state is 150mA ~ 700mA. Assuming that the mobile terminal is in a data full-rate transmission state and the length of time set in both the DCH state stopping timer and the FACH state stopping timer is 20 seconds, if the mobile terminal needs to enter into the idle state, that is, the amount of data transmitted between the mobile terminal and the network side is 0, the mobile terminal will take 40 seconds to transit from the DCH state to the low-power idle state. The invalid power consumption throughout the transition process is estimated to be 150mA*20sec+100mA*20sec= 5000mA*sec according to the minimum currents consumed under the aforementioned states, and is equivalent to the power consumption of 1.5 hours under the low-power idle state, thus decreasing the idle time by 1.5 hours. Therefore, using the state transition method in which expiration of the time set in the time is waited through only the network side will waste some of electricity of the mobile terminal. Due to more and more use of Internet-related functions in the mobile terminal, waste of the electricity caused by the state transition becomes a non-negligible problem.

### Summary of the Invention

In view of this, a main object of the present invention is to provide a method for entering into an idle mode actively and a mobile terminal to which the method is applied such that the mobile terminal can enter into an idle mode directly, thereby avoiding waste of electricity in a state transition process.

In order to achieve the aforementioned object, a technical scheme of the present invention is accomplished as follows.

The present invention provides a method for entering into an idle mode comprising:
a mobile terminal getting ready to enter into an idle state; and
determining whether a data connection exists currently, and if the data connection exists, sending a connection release message to a network side, and the mobile terminal entering into the idle state after receiving a reply message, if the data connection does not exist, the mobile terminal entering into the idle state directly.

A triggering condition for the mobile terminal to get ready to enter into the idle state includes a user instruction or information that the mobile terminal enters into a state in which data transmission does not exist.

The connection release message is a message that is able to notify the network side to release all connections between the mobile terminal and the network side.

The mobile terminal getting ready to enter into the idle state comprises:
for a Windows Mobile operating system, a power management module in the mobile terminal sending a command to drive various modules to enter into the idle state by calling a IOCTL_POWER_SET function; and
for an Android operating system, a power management module in an Android system kernel in the mobile terminal checking whether wakeup_lock of all modules has been released, if yes, it is indicated that the system can enter into the idle state immediately.

The entering into the idle state comprises:
for the Windows Mobile operating system, the power management module commanding a Central Processing Unit (CPU) to enter into a low-power mode after confirming that all the modules have entered into the idle state; and
for the Android operating system, the power management module freezing all process activities, and then commanding the CPU to enter into the low-power mode.

The present invention also provides a mobile terminal entering into an idle mode comprising a power management module and a radio interface layer (RIL) module, wherein
the power management module is configured to allow the mobile terminal to get ready to enter into an idle state, and cause the mobile terminal to enter into the idle state after receiving a reply message from a network side forwarded by the RIL module or a confirmation message indicating that a data connection does not exist returned by the RIL module; and
the RIL module is configured to determine whether a data connection exists, and if the data connection exists, send a connection release message to the network side, and receive and forward the reply message to the power management module, if the data connection does not exist, return a confirmation message indicating that the data connection does not exist to the power management module.

The mobile terminal further comprises additional function modules configured to provide the power management module with a triggering condition for the mobile terminal to enter into the idle state after receiving a user instruction or information that the mobile terminal enters into a state in which data transmission does not exist.

The connection release message sent by the RIL module is a message that is able to notify the network side to release all connections between the mobile terminal and the network side.

The power management module allowing the mobile terminal to get ready to enter into the idle state comprises:
for a Windows Mobile operating system, a power management module in the mobile terminal sending a command to drive various modules to enter into the idle state by calling a IOCTL_POWER_SET function; and
for an Android operating system, a power management module in an Android system kernel in the mobile terminal checking whether wakeup_lock of all modules has been released, if yes, it is indicated that the system can enter into the idle state immediately.

The power management module causing the mobile terminal to enter into the idle state comprises:
for the Windows Mobile operating system, the power management module commanding a Central Processing Unit (CPU) to enter into a low-power mode after confirming that all the modules have entered into the idle state; and
for the Android operating system, the power management module freezing all process activities, and then commanding the CPU to enter into the low-power mode.

In the method for entering into the idle state actively and the mobile terminal to which the method is applied in accordance with the present invention, it is determined whether a data connection exists after the mobile terminal gets ready to enter into the idle state, and if the data connection exists, a connection release message is sent to the network side, and the mobile terminal enters into the idle state after receiving a reply message, if the data connection does not exist, it enters into the idle state directly. Therefore, the mobile terminal is able to enter into the idle state directly without waiting for the DCH state stopping timer and the FACH status stopping timer at the network side such that the state transition of the mobile terminal is more quickly, thereby avoiding waste of electricity in the state transition process and further extending the idle time of the mobile terminal.

### Brief Description of Drawings

FIG. 1 is a schematic diagram of working states and a transition process specified in the 3GPP;
FIG. 2 is a flow chart of a method for entering into an idle mode actively in accordance with the present invention; and
FIG. 3 is a block diagram of a mobile terminal entering into an idle mode actively in accordance with the present invention.

### Preferred Embodiments of the Present Invention

The technical scheme of the present invention will be further described in detail below in conjunction with the accompanying drawings and specific embodiments.

FIG. 2 is a flow chart of a method for entering into an idle mode actively in accordance with the present invention. As shown in FIG. 2, the method for entering into the idle mode actively specifically comprises the following steps.

In step 201, a mobile terminal gets ready to enter into an idle state.

Specifically, a triggering condition for the mobile terminal to get ready to enter into the idle state includes a user instruction or information that the mobile terminal enters into a state in which data transmission does not exist. The user instruction might be completed by a user through a dedicated button, for example, the user presses a power button.

Furthermore, if operating systems installed in the mobile terminal are different, the processes in which the mobile terminal enters into the idle state are slightly different as well. For a Windows Mobile operating system, after receiving a trigger command to get ready to enter into the idle state, a power management module in the mobile terminal sends a command to drive various modules to enter into the idle state by calling an IOCTL_POWER_SET function, where each module comprises a radio interface layer (RIL) module and additional function modules. For an Android operating system, a power management module in an Android system kernel in the mobile terminal checks whether wakeup_lock of all modules has been released, and if yes, it is indicated that the system can enter into the idle state immediately, at this point, the power management module sends a notification message to the RIL module to trigger step 202, otherwise, the mobile terminal cannot enter into the idle state.

In step 202, it is determined whether a data connection exists, if it exists, step 203 is performed, if it does not exists, step 204 is performed.

Specifically, after the RIL module in the mobile terminal receives the notification message of getting ready to enter into the idle state sent by the power management module, it determines whether the data connection exists, and if it exists, step 203 is performed.

In step 203, a connection release message is sent to the network side, and a reply message of the connection release message is received from the network side, and then step 204 is performed.

Specifically, the mobile terminal sends the connection release message to the network side through a terminal protocol stack. The connection release message, such as a signaling connection release indication message specified in the 3GPP, is used to notify the network side to release all connections between the mobile terminal and the network side. In addition, if the signaling connection release indication message is used to implement the present invention, the network side and the related protocols are not required to be modified, thus the implementation of the present invention is more convenient, and the cost is lower. The network side releases all the connections with the mobile terminal and then returns a reply message to indicate that the mobile terminal can enter into the idle state.

In step 204, the mobile terminal has entered into the idle state.

Specifically, the processes in which the mobile terminal using different operating systems enters into the idle state are slightly different. For the Windows Mobile operating system, the power management module commands a Central Processing Unit (CPU) to enter into a low-power mode after confirming that all the modules have entered into the idle state, after this is done, it is indicated that the mobile terminal in which the Windows Mobile operating system is installed has entered into the idle state. For the Android operating system, the power management module freezes all process activities, and then commands the CPU to enter into the low-power mode, after this is done, it is indicated that the mobile terminal in which the Android operating system is installed has entered into the idle state.

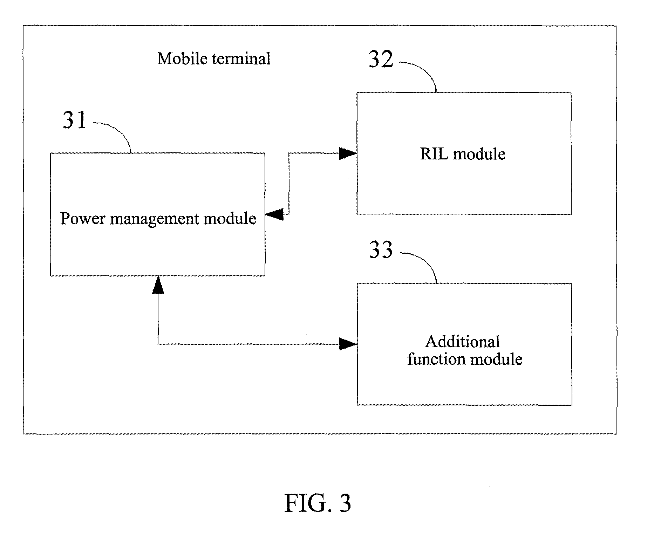

FIG. 3 is a block diagram of a mobile terminal entering into an idle mode actively in accordance with the present invention. As shown in FIG. 3, the mobile terminal entering into the idle mode actively comprises a power management module 31, a RIL module 32, and additional function modules 33.

The power management module 31 is configured to allow the mobile terminal to get ready to enter into an idle state, and cause the mobile terminal to enter into the idle state after receiving a reply message from a network side forwarded by the RIL module 32 or a confirmation message indicating that a data connection does not exist returned by the RIL module 32.

Specifically, for different operating systems, the processes in which the mobile terminal is ready to enter into the idle state are also slightly different. For the Windows Mobile operating system, after receiving a trigger command to get ready to enter into the idle state, the power management module 31 in the mobile terminal sends a command to drive various modules to enter into the idle state by calling an IOCTL_POWER_SET function, where each module comprises a radio interface layer (RIL) module and additional function modules. For an Android operating system, the power management module 31 in an Android system kernel in the mobile terminal checks whether wakeup_lock of all modules has been released, and if yes, it is indicated that the system can enter into the idle state immediately, at this point, the power management module 31 sends a notification message to the RIL module 32 to trigger a determination whether a data connection exists, otherwise, the mobile terminal cannot enter into the idle state.

For different operating systems, the processes in which the mobile terminal enters into the idle state are also slightly different. For the Windows Mobile operating system, the power management module 31 commands a Central Processing Unit (CPU) to enter into a low-power mode after confirming that all the modules have entered into the idle state, after this is done, it is indicated that the mobile terminal in which the Windows Mobile operating system is installed has entered into the idle state. For the Android operating system, the power management module 31 freezes all process activities, and then commands the CPU to enter into the low-power mode, after this is done, it is indicated that the mobile terminal in which the Android operating system is installed has entered into the idle state.

The RIL module 32 is configured to determine whether a data connection exists, and if the data connection exists, send a connection release message to the network side, and receive and forward the reply message to the power management module 31, and if the data connection does not exist, return a confirmation message indicating that the data connection does not exist to the power management module 31.

Specifically, after the RIL module 32 in the mobile terminal receives the notification message of getting ready to enter into the idle state sent by the connection release message 31, it determines whether a data connection exists currently, and if it exist, sends a connection release message to the network side through a terminal protocol stack. The connection release message, such as a signaling connection release indication message specified in the 3GPP, is used to notify the network side to release all connections between the mobile terminal and the network side. The reply message is a reply message returned after the network side releases all the connections with the mobile terminal, which indicates that the mobile terminal can enter into the idle state.

The additional function modules 33 are configured to provide the mobile terminal with various application functions, and provide the power management module 31 with a triggering condition for the mobile terminal to enter into the idle state after receiving a user instruction or information that the mobile terminal enters into a state in which data transmission does not exist.

Specifically, the additional function modules 33 include function modules generally possessed by the mobile terminal, such as a keyboard input module, a voice input module, a display module, and a data transfer management module. The triggering condition for the mobile terminal to get ready to enter into the idle state includes a user instruction or information that the mobile terminal enters into a state in which data transmission does not exist. The user instruction might be completed by a user through a dedicated button, for example, the user presses a power button. At this point, the keyboard input module sends a triggering message indicating that the power button is pressed to the power management module 31 to trigger the power management module 31 to get ready to enter into the idle state; after the mobile terminal enters into the state in which data transmission does not exist, the data transmission management module sends the triggering message to the power management module 31 to trigger the power management module 31 to get ready to enter into the idle state.

The above description is only the preferred embodiments of the present invention and is not intended to limit the protection scope of the present invention. Any modification, equivalent substitution and variation made within the spirit and principle of the present invention should be covered in the protection scope of the present invention.

## Claims

1. A method for method for entering into an idle mode comprising:
a mobile terminal getting ready to enter into an idle state; and
determining whether a data connection exists currently, and if the data connection exists, sending a connection release message to a network side, and the mobile terminal entering into the idle state after receiving a reply message, if the data connection does not exist, the mobile terminal entering into the idle state directly.

2. The method according to claim 1, wherein a triggering condition for the mobile terminal to get ready to enter into the idle state includes a user instruction or information that the mobile terminal enters into a state in which data transmission does not exist.

3. The method according to claim 1 or 2, wherein the connection release message is a message that is able to notify the network side to release all connections between the mobile terminal and the network side.

4. The method according to claim 1 or 2, wherein the mobile terminal getting ready to enter into the idle state comprises:
for a Windows Mobile operating system, a power management module in the mobile terminal sending a command to drive various modules to enter into the idle state by calling a IOCTL_POWER_SET function; and
for an Android operating system, a power management module in an Android system kernel in the mobile terminal checking whether wakeup_lock of all modules has been released, if yes, it is indicated that the system can enter into the idle state immediately.

5. The method according to claim 1 or 2, wherein the entering into the idle state comprises:
for the Windows Mobile operating system, the power management module commanding a Central Processing Unit (CPU) to enter into a low-power mode after confirming that all the modules have entered into the idle state; and
for the Android operating system, the power management module freezing all process activities, and then commanding the CPU to enter into the low-power mode.

6. A mobile terminal entering into an idle mode comprising a power management module and a radio interface layer (RIL) module, wherein
the power management module is configured to allow the mobile terminal to get ready to enter into an idle state, and cause the mobile terminal to enter into the idle state after receiving a reply message from a network side forwarded by the RIL module or a confirmation message indicating that a data connection does not exist returned by the RIL module; and
the RIL module is configured to determine whether a data connection exists, and if the data connection exists, send a connection release message to the network side, and receive and forward the reply message to the power management module, if the data connection does not exist, return a confirmation message indicating that the data connection does not exist to the power management module.

7. The mobile terminal according to claim 6, wherein the mobile terminal further comprises additional function modules configured to provide the power management module with a triggering condition for the mobile terminal to enter into the idle state after receiving a user instruction or information that the mobile terminal enters into a state in which data transmission does not exist.

8. The mobile terminal according to claim 6 or 7, wherein the connection release message sent by the RIL module is a message that is able to notify the network side to release all connections between the mobile terminal and the network side.

9. The mobile terminal according to claim 6 or 7, wherein the power management module allowing the mobile terminal to get ready to enter into the idle state comprises:
for a Windows Mobile operating system, a power management module in the mobile terminal sending a command to drive various modules to enter into the idle state by calling a IOCTL_POWER_SET function; and
for an Android operating system, a power management module in an Android system kernel in the mobile terminal checking whether wakeup_lock of all modules has been released, if yes, it is indicated that the system can enter into the idle state immediately.

10. The mobile terminal according to claim 6 or 7, wherein the power management module causing the mobile terminal to enter into the idle state comprises:
for the Windows Mobile operating system, the power management module commanding a Central Processing Unit (CPU) to enter into a low-power mode after confirming that all the modules have entered into the idle state; and
for the Android operating system, the power management module freezing all process activities, and then commanding the CPU to enter into the low-power mode.
